# EUROPEAN PATENT SPECIFICATION

(11) **EP 4 273 286 B1**
(45) Date of publication and mention of the grant of the patent: **08.07.2026**
(21) Application number: 23171589.7
(22) Date of filing: 04.05.2023
(51) Int. Cl.: C22C 21/04, C22C 1/02, C22C 1/03, B62D 29/00

(54) **ALUMINUM ALLOY AND COMPONENT PART PREPARED THEREFROM**
ALUMINIUMLEGIERUNG UND DARAUS HERGESTELLTES BAUTEIL
ALLIAGE D'ALUMINIUM ET PIÈCE DE COMPOSANT PRÉPARÉE À PARTIR DE CELUI-CI

(30) Priority: 05.05.2022 CN 202210479734
(43) Date of publication of application: 08.11.2023
(73) Proprietor: Nio Technology (Anhui) Co., Ltd, Hefei City, Anhui 230601 (CN); CSMET Group Co. Ltd., Shanghai 201500 (CN)
(72) Inventor: LIU, Huachu, Hefei, Anhui 230601 (CN); SHI, Chunmei, Hefei, Anhui 230601 (CN); DUAN, Zhenrong, Hefei, Anhui 230601 (CN); LI, Shuo, Hefei, Anhui 230601 (CN); HUGES, Gary, Hefei, Anhui 230601 (CN); CHENG, Shuai, Shanghai 201500 (CN); DU, Yanjun, Shanghai 201500 (CN); YANG, Fan, Shanghai 201500 (CN); FU, Wentao, Shanghai 201500 (CN); ZHANG, Yuebo, Shanghai 201500 (CN)
(74) Representative: Vossius & Partner Patentanwälte Rechtsanwälte mbB

(56) References cited:
- EP-A1- 2 471 967
- CN-A- 113 373 352

## Description

### Technical Field

The disclosure belongs to the field of aluminum alloys. In particular, the disclosure relates to an aluminum alloy and a component part prepared therefrom.

### Background Art

Under the global trend of energy conservation and emission reduction, vehicle manufacturing and use is an important field of energy conservation and emission reduction. Replacing traditional fuel vehicles with electric vehicles has become a globally recognized solution for energy conservation and emission reduction.

As we all know, electric vehicles do not burn fossil fuels during use, nor do they produce tail gas emissions, which avoids the contribution of tail gas to the greenhouse effect. However, till now, the manufacturing process of electric vehicles still relies heavily on fossil fuels or the electric energy generated by them, which thereby generates more greenhouse gas emissions.

In order to improve the endurance mileage and safety performance of the electric vehicles, major vehicle manufacturers are increasingly using light alloys. Among them, aluminum alloys have become a preferred vehicle body material for mainstream electric vehicles due to their advantages of low density, high specific strength, good processability, abundant resources, etc. Aluminum alloy die-cast parts are often used in load-bearing joint parts of the vehicle body due to their high production efficiency, excellent and stable performance, the ability to be designed and processed into complex shapes and the reduction in connection and assembly required by traditional parts.

Traditional processing techniques for die-cast aluminum alloy parts usually include high-pressure casting, trimming, heat treatment (solution + aging), shaping, machining, surface treatment and final delivery to a vehicle body assembly workshop. EP 2 471 967 A1 discloses an iron containing aluminium alloy free of primary platelet-shaped beta-phase of the Al₅FeSi-type in the solidified structure presenting the following composition (amounts expressed in % by weight in respect to the total weight of the alloy): Si 6.00 - 9.50;Fe 0.15 - 0.60; Mn 0.04 - 0.60; Mg 0.20 - 0.70; Cr 0.01 - 0.60; Ti 0.05 - 0.30; Sr and/or Na 0.001 - 0.25; V 0.00 - 0.60; Cu 0.01 - 0.25; Ni 0.01 - 0.1; Zn 0.01 - 0.1,balance being Al and incidental impurities.

With the development of the industry, heat-treatment-free aluminum alloys have become an industry trend. A heat treatment (solution + aging) process not only consumes a lot of energy and produces a lot of greenhouse gas emissions, but also leads to dimensional deformation of parts due to heating and cooling effects, which affects assembly accuracy and even leads to scrap.

At present, various aluminum alloy enterprises have developed some heat-treatment-free alloy formulae, such as Al-Si series Castasil-37 and Al-Mg series Magsimal-59 alloy formulae of Rheinmetall, Al-Si series EZ-cast 370 and Al-Mg series A152 of Alcoa, Al-Si series of Tesla Motors, etc.

In the art, it is also hoped to develop more aluminum alloys. In the process of processing aluminum alloys into parts, the die-casting parts have high strength and high toughness in the as-cast state to meet the load-bearing requirements, such that heat treatment can be exempted, which is beneficial to energy saving and emission reduction.

### Summary

An object of the disclosure is to provide a high-pressure cast aluminum alloy, which can be exempt from heat treatment after casting in the process of processing the aluminum alloy into a component part, and the prepared component part has mechanical properties meeting corresponding requirements.

The object of the disclosure can be achieved by the following technical solutions.

A first aspect of the disclosure provides an aluminum alloy, comprising, relative to a total weight of the aluminum alloy: 7-9 wt% of silicon (Si), 0.15-0.45 wt% of chromium (Cr), 0.1-0.3 wt% of vanadium (V), 100-260 ppm of strontium (Sr), 0.1-0.2 wt% of titanium (Ti), 0-0.5 wt% of manganese (Mn), 0-0.8 wt% of iron (Fe) and the balance being aluminum and inevitable impurities.

A second aspect of the disclosure provides the use of the aluminum alloy in preparation of a component part.

A third aspect of the disclosure provides a component part, which is prepared from the aluminum alloy.

The aluminum alloy of the disclosure can be exempt from heat treatment process after casting in the processing process, so as to contribute to energy conservation and emission reduction, and the component part prepared therefrom can achieve desired mechanical properties.

### Detailed Description of Embodiments

Hereinafter, various aspects of the disclosure and further objects, features and advantages will be more fully embodied.

A first aspect of the disclosure provides an aluminum alloy, comprising, relative to a total weight of the aluminum alloy: 7-9 wt% of silicon (Si), 0.15-0.45 wt% of chromium (Cr), 0.1-0.3 wt% of vanadium (V), 100-260 ppm of strontium (Sr), 0.1-0.2 wt% of titanium (Ti), 0-0.5 wt% of manganese (Mn), 0-0.8 wt% of iron (Fe) and the balance being aluminum and inevitable impurities.

In the aluminum alloy of the disclosure, the silicon element, which is present in a content of 7-9 wt% relative to the total weight of the aluminum alloy, provides the fluidity for the aluminum alloy, ensures controllable shrinkage of the alloy in the solidification process, and reduces hot cracking tendency of a casting.

The silicon, which is present in a content of 7-9 wt% relative to the total weight of the aluminum alloy, not only ensures tensile strength of the alloy, but also ensures more than 85% by volume of an α-aluminum phase in the casting, thereby ensuring plasticity and toughness of the casting.

Preferably, relative to the total weight of the aluminum alloy, the content of the silicon is 7.2-8.6 wt%, and more preferably, relative to the total weight of the aluminum alloy, the content of the silicon is 7.4-8.4 wt%, or the content of the silicon is 7.6 wt, 7.7 wt%, 7.8 wt%, 7.9 wt%, 8.0 wt%, 8.1 wt%, 8.2 wt%, 8.3 wt% or 8.4 wt%.

In the aluminum alloy of the disclosure, relative to the total weight of the aluminum alloy, the content of the chromium element is 0.15-0.45 wt%.

The chromium, which is present in a content of 0.15-0.45 wt% relative to the total weight of the aluminum alloy, increases the demoulding properties and strength of the casting.

Preferably, relative to the total weight of the aluminum alloy, the content of the chromium is 0.16-0.44 wt%, and more preferably, relative to the total weight of the aluminum alloy, the content of the manganese is 0.17-0.43 wt%, or the content of the chromium is 0.18 wt%, 0.20 wt%, 0.30 wt%, 0.33 wt%, 0.36 wt%, 0.37 wt%, 0.38 wt% or 0.40 wt%.

In the aluminum alloy of the disclosure, relative to the total weight of the aluminum alloy, the content of the vanadium element is 0.1-0.3 wt%.

The vanadium (V), which is present in a content of 0.1-0.3 wt% relative to the total weight of the aluminum alloy, can form an Al-V intermetallic compound with Al, thereby providing the functions of grain refinement and dispersion strengthening, and improving the strength. In addition, the addition of the V element will also improve the corrosion resistance of the aluminum alloy and modify the intermetallic phase containing iron (if present).

Preferably, relative to the total weight of the aluminum alloy, the content of the vanadium is 0.11-0.27 wt%, and more preferably, relative to the total weight of the aluminum alloy, the content of the vanadium is 0.12-0.25 wt%, or the content of the vanadium is 0.13 wt%, 0.14 wt%, 0.16 wt%, 0.17 wt%, 0.18 wt% or 0.2 wt%.

In the aluminum alloy of the disclosure, relative to the total weight of the aluminum alloy, the content of the strontium element is 100-260 ppm or 291 ppm within the specific composition defined in appended claim 10.

The strontium, which is present in a content of at least 100 ppm relative to the total weight of the aluminum alloy, can modify the acicular eutectic silicon phase in a solidified structure into fibrous morphology (modification treatment), thereby improving the mechanical properties of the casting.

Advantageously, relative to the total weight of the aluminum alloy, the content of the strontium is 100-255 ppm.

In the aluminum alloy of the disclosure, relative to the total weight of the aluminum alloy, the content of the titanium element is 0.1-0.2 wt%.

The titanium, which is present in a content of 0. 1-0.2 wt% relative to the total weight of the aluminum alloy, serves to refine the grain size of the α-A1 phase.

Preferably, relative to the total weight of the aluminum alloy, the content of the titanium is 0.1-0.18 wt%, and more preferably, relative to the total weight of the aluminum alloy, the content of the titanium is 0.1-0.16 wt%, or the content of the titanium is 0.11 wt%, 0.14 wt% or 0.15 wt%.

In the aluminum alloy of the disclosure, the manganese may be present optionally, and relative to the total weight of the aluminum alloy, the content of the manganese element is 0-0.5 wt%.

The presence of the manganese may further increase the demolding properties and strength of the casting.

Preferably, relative to the total weight of the aluminum alloy, the content of the manganese is 0.005-0.45 wt%, and more preferably, relative to the total weight of the aluminum alloy, the content of the manganese is 0.008-0.43 wt%, or the content of the manganese is 0.009 wt%, 0.01 wt%, 0.20 wt%, 0.25 wt%, 0.26 wt%, 0.40 wt% or 0.41 wt%.

In the aluminum alloy of the disclosure, the iron may be present optionally, and relative to the total weight of the aluminum alloy, the content of the iron element is 0-0.8 wt%.

In some embodiments, relative to the total weight of the aluminum alloy, the content of the iron is 0.1-0.8 wt%.

In some embodiments, relative to the total weight of the aluminum alloy, the content of the iron is 0.2-0.5 wt%. The inventors found that even when the iron content is as high as about 0.8%, the aluminum alloy of the disclosure still maintains excellent mechanical properties. Therefore, in the preparation process of the aluminum alloy of the disclosure, there is no particularly strict requirement for the iron content in raw materials, so there is a wide choice of raw materials. Some wastes in the art may also be used as the raw materials of the aluminum alloy of the disclosure.

The inventors also found that when the iron content is high, the intermetallic phase containing iron can be modified by a combination of Cr and Mn, so as to maintain excellent mechanical properties.

The inventors also found that when the aluminum alloy comprises iron (Fe) and the iron content exceeds 0.15 wt% relative to the total weight of the aluminum alloy, the ranges of the mechanical properties can be adjusted by adjusting the ratio S of the total content of Mn and Cr / the content of Fe.

When the aluminum alloy comprises iron (Fe) and the iron content exceeds 0.15 wt% relative to the total weight of the aluminum alloy, in the case that the ratio S of the total content of Mn and Cr / the content of Fe is ≥ 0.85, the casting prepared from the aluminum alloy of the disclosure has a tensile strength (UTS) of ≥ 260 MPa, a yield strength (YS) of ≥ 120 MPa and an elongation at break (EL) of ≥ 12%.

When the aluminum alloy comprises iron (Fe) and the iron content exceeds 0.15 wt% relative to the total weight of the aluminum alloy, in the case that the ratio S of the total content of Mn and Cr / the content of Fe is < 0.85, the casting prepared from the aluminum alloy of the disclosure has a tensile strength (UTS) of > 250 MPa, a yield strength (YS) of ≥ 125 MPa and an elongation at break (EL) of ≥ 11%.

In some embodiments, the aluminum alloy comprises iron (Fe), and relative to the total weight of the aluminum alloy, the ratio S of the total content of Mn and Cr / the content of Fe is ≥ 0.85.

In some embodiments, the aluminum alloy comprises iron (Fe), and relative to the total weight of the aluminum alloy, the ratio S of the total content of Mn and Cr / the content of Fe is < 0.85.

In some embodiments, the aluminum alloy comprises at least 0.15 wt% of iron (Fe), and relative to the total weight of the aluminum alloy, the ratio S of the total content of Mn and Cr / the content of Fe is ≥ 0.85.

In some embodiments, the aluminum alloy comprises at least 0.15 wt% of iron (Fe), and relative to the total weight of the aluminum alloy, the ratio S of the total content of Mn and Cr / the content of Fe is < 0.85.

The aluminum alloy of the disclosure has simple ingredients, and good economy and castability.

For example, the aluminum alloy of the disclosure may be prepared according to the following steps:
1) Material preparation: Materials are prepared according to proportions of alloy ingredients. Alloying elements are added in the form of pure alloys or intermediate alloys, for example, the Si element is added in the form of elemental silicon, the Cr element is added in the form of an Al-Cr intermediate alloy, the V element is added in the form of an Al-V intermediate alloy, the Ti element is added in the form of an Al-Ti intermediate alloy, the Mn element (if present) is added in the form of an Al-Mn intermediate alloy, the Fe element (if present) is added in the form of an Al-Fe intermediate alloy (when recycled aluminum is used for blending, according to the actual control within the maximum range of 0.8, there is no need to add iron-related alloys), and the Sr element is added in the form of an Al-Sr intermediate alloy.
2) Melting of aluminum ingot: After the surface of a pure aluminum ingot is cleaned, the pure aluminum ingot and silicon are placed in an electric resistance crucible for heating and melting. The temperature of the molten aluminum is controlled at 720-740°C.
3) Addition of intermediate alloy: When the temperature of the molten aluminum reaches 730-735°C, the Al-Cr intermediate alloy, the Al-V intermediate alloy, the Al-Ti intermediate alloy and the other intermediate alloys that are dried are added to the molten aluminum. The temperature of the molten aluminum is increased to 740-760°C and kept for 10-30 min to ensure that all the intermediate alloys added are melted.
4) Refining, modification and degassing: The Al-Sr intermediate alloy is pressed into the molten aluminum first, and then the molten aluminum is degassed in order to remove hydrogen in the molten aluminum. Parameters are controlled as follows: the rotate speed of a degasser is 150-300 rpm, the gas introduced is high-purity argon or nitrogen with a purity of greater than 99.99%, and the flow rate of the gas is 0.3-0.8 L/min.
5) Ingredient detection and cooling: After the refining and the degassing are completed, scum on the surface of the molten aluminum is scraped off, the molten aluminum is allowed to stand for 15-25 min, and a spectral sample piece is taken to detect its ingredients. The molten aluminum is cooled after the ingredients meet the requirements.

The aluminum alloy of the disclosure may be cast by conventional methods in the art, for example, it may be cast under high pressure.

Specifically, the aluminum alloy of the disclosure may be cast according to the following die-casting process:
The temperature of a die-casting molten aluminum is controlled at 680-700°C, the temperature of a mold temperature controller is controlled at 150-170°C, the speed at a high speed is controlled at 1.65-1.85 m/s, and the boost pressure is 65 Mpa. In the case of processing the aluminum alloy into a specific component part, trimming, dimensional inspection and optional proper shaping are further carried out after casting.

In addition, since the alloy formula of the disclosure can absorb up to 0.8 wt% of the iron (Fe) element, it is possible to use recycled wastes when melting the alloy ingredients, which contributes to energy conservation and emission reduction.

The aluminum alloy of the disclosure has good mechanical properties in the as-cast state. It is an advantage of the aluminum alloy formula of the disclosure that the mechanical properties required by the design can be achieved by eliminating the heat treatment process after the casting, which can realize energy conservation and emission reduction.

The excellent strength and elongation of the aluminum alloy of the disclosure ensure the light weight and safety of the prepared component part.

A second aspect of the disclosure provides the use of the aluminum alloy in preparation of a component part.

The aluminum alloy of the disclosure can be used in the preparation of a component part, and the prepared component part can meet certain mechanical requirements.

For example, the aluminum alloy of the disclosure can be used in the preparation of a vehicle body, a chassis and other load-bearing parts.

A third aspect of the disclosure provides a component part, which is prepared from the aluminum alloy.

The component part prepared from the aluminum alloy of the disclosure has excellent mechanical properties, and can be used as a vehicle body, a chassis and other load-bearing parts.

Therefore, the component part is selected from a vehicle body, a chassis and other load-bearing parts.

In this application, the terms "include" and "comprise" cover the case where other elements not explicitly mentioned are also included or comprised, and the case composed of the mentioned elements.

Unless otherwise defined, all technical and scientific terms used herein have the same meaning as commonly understood by those skilled in the art to which the disclosure belongs. When the definitions of terms in the description conflict with the meaning generally understood by those skilled in the art to which the disclosure belongs, the definition described herein shall prevail.

Unless otherwise stated, all values used in the description and claims to express the amount, temperature, etc. of ingredients are understood to be modified by the term "about". Therefore, unless indicated to the contrary, the numerical parameters described herein are approximate values that can vary according to the desired performance that needs to be achieved.

### Examples

The concept, specific structure and the generated technical effects of the disclosure will be further described below with reference to examples, such that those skilled in the art can fully understand the purposes, features and effects of the disclosure. It will be readily understood by those skilled in the art that the examples herein are only for exemplary purposes, and the scope of the disclosure is not limited thereto. Unless explicitly stated, the raw materials used in the examples are those commonly used in the art.

### Example 1

This example provides an aluminum alloy, comprising, relative to a total weight of the aluminum alloy: Si: 8.0 wt%, Cr: 0.20 wt%, V: 0.16 wt%, Ti: 0.11 wt%, Fe: 0.12 wt%, Sr: 120 ppm; and the balance being aluminum and inevitable impurities.

The preparation process of the aluminum alloy is as follows:
1) Material preparation and furnace cleaning: Materials are prepared according to proportions of alloy ingredients. After the material preparation is completed, the furnace needs to be cleaned. Alloying elements are added in the form of pure alloys or intermediate alloys. The Si element is added in the form of elemental silicon 3303, the Cr element is added in the form of an Al-Cr intermediate alloy, the V element is added in the form of an Al-V intermediate alloy, the Ti element is added in the form of an Al-Ti intermediate alloy, the Mn element is added in the form of an Al-Mn intermediate alloy, the Fe element is added in the form of an Al-Fe intermediate alloy, and the Sr element is added in the form of an Al-Sr intermediate alloy.
2) Melting of aluminum ingot: After the surface of a pure aluminum ingot is cleaned, the pure aluminum ingot and the silicon 3303 are placed in an electric resistance crucible for heating and melting. The temperature of an molten aluminum is controlled at 720-740°C.
3) Addition of intermediate alloy: When the temperature of the molten aluminum reaches 730°C, the Al-Cr intermediate alloy, the Al-V intermediate alloy, the Al-Ti intermediate alloy and the other intermediate alloys that are dried are added to the molten aluminum. The temperature of the molten aluminum is increased to 740°C and kept for 15 min to ensure that all the intermediate alloys added are melted.
4) Refining, modification and degassing: The Al-Sr intermediate alloy is pressed into the molten aluminum first, and then the molten aluminum is degassed by a degasser with a graphite rotor in order to remove hydrogen in the molten aluminum. Parameters are controlled as follows: the rotate speed of a degasser is 150-300 rpm, the gas introduced is high-purity argon or nitrogen with a purity of greater than 99.99%, and the flow rate of the gas is 0.3-0.8 L/min.
5) Ingredient detection and cooling: After the refining and the degassing are completed, scum on the surface of the molten aluminum is scraped off, the molten aluminum is allowed to stand for 15-25 min, and a spectral sample piece is taken to detect its ingredients. The molten aluminum is cooled to 680-700°C after the ingredients meet the requirements.

The prepared aluminum alloy is cast into an aluminum alloy sample according to the following casting process: the temperature of a mold temperature controller is controlled at 150-170°C, the speed at a high speed is controlled at 1.65-1.85 m/s, and the boost pressure is 65 Mpa.

The mechanical properties of the prepared aluminum alloy sample are tested according to GB/T 228.1. The results are shown in Table 1.

### Examples 2 to 7

A series of aluminum alloys are prepared by a process basically the same as in Example 1. The specific ingredients and contents are shown in Table 1 (the balance is aluminum and inevitable impurities, not shown). The prepared aluminum alloy samples are tested for their mechanical properties. The results are shown in Table 1.

**Table 1**

| | Example 1 | Example 2 | Example 3 | Example 4 | Example 5 | Example 6 | Example 7 |
|---|---|---|---|---|---|---|---|
| Si (wt%) | 8.0 | 7.7 | 7.6 | 8.1 | 7.8 | 7.8 | 7.7 |
| Cr (wt%) | 0.20 | 0.18 | 0.33 | 0.37 | 0.40 | 0.38 | 0.36 |
| V (wt%) | 0.16 | 0.14 | 0.12 | 0.12 | 0.13 | 0.18 | 0.13 |
| Ti (wt%) | 0.11 | 0.11 | 0.11 | 0.14 | 0.14 | 0.10 | 0.10 |
| Mn (wt%) | - | - | - | 0.41 | 0.40 | 0.26 | 0.25 |
| Fe (wt%) | 0.12 | 0.20 | 0.39 | 0.19 | 0.49 | 0.39 | 0.75 |
| Sr (ppm) | 122 | 252 | 159 | 115 | 291 | 123 | 260 |
| S value* | >0.85 | >0.85 | >0.85 | >0.85 | >0.85 | >0.85 | <0.85 |
| Tensile strength (MPa) | 267.5 | 262.9 | 260 | 264.3 | 261.5 | 263.2 | 253.6 |
| Yield strength (MPa) | 123.5 | 122.5 | 121.3 | 122.2 | 129.6 | 125.4 | 126.6 |
| Elongation at break (%) | 15.52 | 15.52 | 16.56 | 13.94 | 12.06 | 15.06 | 11.40 |

| | | | | | | | |
|---|---|---|---|---|---|---|---|
| S value* = (Mn + Cr)/Fe | | | | | | | |

As can be seen from Table 1, the aluminum alloy of the disclosure in the as-cast state can have a tensile strength of more than 250 MPa, a yield strength of more than 120 MPa and an elongation of more than 10%.

In the example with a relatively low iron content (such as Example 4), the elongation can be as high as 16% without decreasing the tensile strength and yield strength.

### Comparative Examples 1 to 5

A series of aluminum alloys are prepared by a process basically the same as in Example 1. The specific ingredients and contents are shown in Table 2 (the balance is aluminum and inevitable impurities, not shown). The prepared aluminum alloy samples are tested for their mechanical properties. The results are shown in Table 2.

**Table 2**

| | Comparative Example 1 | Comparative Example 2 | Comparative Example 3 | Comparative Example 4 | Comparative Example 5 |
|---|---|---|---|---|---|
| Si (wt%) | 8.58 | 10 | 8.1 | 8.1 | 8.1 |
| Cr (wt%) | - | 0.33 | 0.6 | 0.37 | 0.37 |
| V (wt%) | 0.096 | 0.12 | 0.12 | 0.12 | 0.4 |
| Ti (wt%) | 0.14 | 0.11 | 0.14 | 0.3 | 0.14 |
| Mn (wt%) | 0.72 | - | 0.41 | 0.41 | 0.41 |
| Fe (wt%) | 0.35 | 0.39 | 0.19 | 0.19 | 0.19 |
| Sr (ppm) | 190 | 170 | 200 | 160 | 220 |
| Tensile strength (MPa) | 253.8 | 285 | 261.1 | 263.1 | 268.2 |
| Yield strength (MPa) | 130.1 | 136.2 | 132.3 | 136.2 | 131.8 |
| Elongation (%) | 6.8 | 7.3 | 4.5 | 8.9 | 5.7 |

As can be seen from Table 2, the aluminum alloys in Comparative Examples 1 to 5 after casting can have a tensile strength of more than 250 MPa and a yield strength of more than 130 MPa, but the elongation is lower than 9%.

Only the exemplary embodiments or examples of the disclosure have been described above, and they are not intended to limit the disclosure.

## Claims

1. An aluminum alloy, comprising, relative to a total weight of the aluminum alloy: 7-9 wt% of silicon (Si), 0.15-0.45 wt% of chromium (Cr), 0.1-0.3 wt% of vanadium (V), 100-260 ppm of strontium (Sr), 0.1-0.2 wt% of titanium (Ti), 0-0.5 wt% of manganese (Mn), 0-0.8 wt% of iron (Fe) and the balance being aluminum and inevitable impurities.

2. The aluminum alloy according to claim 1, wherein relative to the total weight of the aluminum alloy, the content of the silicon is 7.2-8.6 wt%, and preferably, relative to the total weight of the aluminum alloy, the content of the silicon is 7.4-8.4 wt%, or the content of the silicon is 7.6 wt, 7.7 wt%, 7.8 wt%, 7.9 wt%, 8.0 wt%, 8.1 wt%, 8.2 wt%, 8.3 wt% or 8.4 wt%.

3. The aluminum alloy according to claim 1 or 2, wherein relative to the total weight of the aluminum alloy, the content of the chromium is 0.16-0.44 wt%, and preferably, relative to the total weight of the aluminum alloy, the content of the manganese is 0.17-0.43 wt%, or the content of the chromium is 0.18 wt%, 0.20 wt%, 0.30 wt%, 0.33 wt%, 0.36 wt%, 0.37 wt%, 0.38 wt% or 0.40 wt%.

4. The aluminum alloy according to any one of claims 1 to 3, wherein relative to the total weight of the aluminum alloy, the content of the vanadium is 0.11-0.27 wt%, and preferably, relative to the total weight of the aluminum alloy, the content of the vanadium is 0.12-0.25 wt%, or the content of the vanadium is 0.13 wt%, 0.14 wt%, 0.16 wt%, 0.17 wt%, 0.18 wt% or 0.2 wt%.

5. The aluminum alloy according to any one of claims 1 to 4, wherein relative to the total weight of the aluminum alloy, the content of the titanium is 0.1-0.18 wt%, and preferably, relative to the total weight of the aluminum alloy, the content of the titanium is 0.1-0.16 wt%, or the content of the titanium is 0.11 wt%, 0.14 wt% or 0.15 wt%.

6. The aluminum alloy according to any one of claims 1 to 5, wherein relative to the total weight of the aluminum alloy, the content of the strontium is 100-255 ppm.

7. The aluminum alloy according to any one of claims 1 to 6, wherein it further comprises manganese, relative to the total weight of the aluminum alloy, the content of the manganese is 0.005-0.45 wt%, and preferably, relative to the total weight of the aluminum alloy, the content of the manganese is 0.008-0.43 wt%, or the content of the manganese is 0.009 wt%, 0.01 wt%, 0.20 wt%, 0.25 wt%, 0.26 wt%, 0.40 wt% or 0.41 wt%.

8. The aluminum alloy according to any one of claims 1 to 7, wherein it further comprises iron, wherein relative to the total weight of the aluminum alloy, the content of the iron is 0.1-0.8 wt%.

9. The aluminum alloy according to claim 8, wherein the aluminum alloy comprises iron (Fe), and the ratio S of the total content of Mn and Cr / the content of Fe is ≥0.85.

10. An aluminum alloy, comprising, relative to a total weight of the aluminum alloy: 7.8 wt% of silicon (Si), 0.40 wt% of chromium (Cr), 0.13 wt% of vanadium (V), 291 ppm of strontium (Sr), 0.14 wt% of titanium (Ti), 0.40 wt% of manganese (Mn), 0.49 wt% of iron (Fe) and the balance being aluminum and inevitable impurities.

11. Use of the aluminum alloy according to any one of claims 1 to 10 in preparation of a component part.

12. The use according to claim 11, wherein the component part is selected from a vehicle body, a chassis and other load-bearing parts.

13. A component part, which is prepared from the aluminum alloy according to any one of claims 1 to 10.

14. The component part according to claim 13, wherein the component part is selected from a vehicle body, a chassis and other load-bearing parts.

## Patentansprüche

1. Aluminiumlegierung, umfassend, bezogen auf ein Gesamtgewicht der Aluminiumlegierung: 7-9 Gew.-% Silicium (Si), 0,15-0,45 Gew.-% Chrom (Cr), 0,1-0,3 Gew.-% Vanadium (V), 100-260 ppm Strontium (Sr), 0,1-0,2 Gew.-% Titan (Ti), 0-0,5 Gew.-% Mangan (Mn), 0-0,8 Gew.-% Eisen (Fe), und wobei der Rest Aluminium und unvermeidliche Verunreinigungen ist.

2. Aluminiumlegierung nach Anspruch 1, wobei, bezogen auf das Gesamtgewicht der Aluminiumlegierung, der Gehalt des Siliciums 7,2-8,6 Gew.-% beträgt, und vorzugsweise, bezogen auf das Gesamtgewicht der Aluminiumlegierung, der Gehalt des Siliciums 7,4-8,4 Gew.-% beträgt, oder der Gehalt des Siliciums 7,6 Gew.-%, 7,7 Gew.-%, 7,8 Gew.-%, 7,9 Gew.-%, 8,0 Gew.-%, 8,1 Gew.-%, 8,2 Gew.-%, 8,3 Gew.-% oder 8,4 Gew.-% beträgt.

3. Aluminiumlegierung nach Anspruch 1 oder 2, wobei, bezogen auf das Gesamtgewicht der Aluminiumlegierung, der Gehalt des Chroms 0,16-0,44 Gew.-% beträgt, und vorzugsweise, bezogen auf das Gesamtgewicht der Aluminiumlegierung, der Gehalt des Mangans 0,17-0,43 Gew.-% beträgt, oder der Gehalt des Chroms 0,18 Gew.-%, 0,20 Gew.-%, 0,30 Gew.-%, 0,33 Gew.-%, 0,36 Gew.-%, 0,37 Gew.-%, 0,38 Gew.-% oder 0,40 Gew.-% beträgt.

4. Aluminiumlegierung nach einem der Ansprüche 1 bis 3, wobei, bezogen auf das Gesamtgewicht der Aluminiumlegierung, der Gehalt des Vanadiums 0,11-0,27 Gew.-% beträgt, und vorzugsweise, bezogen auf das Gesamtgewicht der Aluminiumlegierung, der Gehalt des Vanadiums 0,12-0,25 Gew.-% beträgt, oder der Gehalt des Vanadiums 0,13 Gew.-%, 0,14 Gew.-%, 0,16 Gew.-%, 0,17 Gew.-%, 0,18 Gew.-% oder 0,2 Gew.-% beträgt.

5. Aluminiumlegierung nach einem der Ansprüche 1 bis 4, wobei, bezogen auf das Gesamtgewicht der Aluminiumlegierung, der Gehalt des Titans 0,1-0,18 Gew.-% beträgt, und vorzugsweise, bezogen auf das Gesamtgewicht der Aluminiumlegierung, der Gehalt des Titans 0,1-0,16 Gew.-% beträgt, oder der Gehalt des Titans 0,11 Gew.-%, 0,14 Gew.-% oder 0,15 Gew.-% beträgt.

6. Aluminiumlegierung nach einem der Ansprüche 1 bis 5, wobei der Gehalt des Strontiums, bezogen auf das Gesamtgewicht der Aluminiumlegierung, 100-255 ppm beträgt.

7. Aluminiumlegierung nach einem der Ansprüche 1 bis 6, wobei sie des Weiteren Mangan umfasst, wobei, bezogen auf das Gesamtgewicht der Aluminiumlegierung, der Gehalt des Mangans 0,005-0,45 Gew.-% beträgt, und vorzugsweise, bezogen auf das Gesamtgewicht der Aluminiumlegierung, der Gehalt des Mangans 0,008-0,43 Gew.-% beträgt, oder der Gehalt des Mangans 0,009 Gew., 0,01 Gew.-%, 0,20 Gew.-%, 0,25 Gew.-%, 0,26 Gew.-%, 0,40 Gew.-% oder 0,41 Gew.-% beträgt.

8. Aluminiumlegierung nach einem der Ansprüche 1 bis 7, wobei sie des Weiteren Eisen umfasst, wobei der Gehalt des Eisens, bezogen auf das Gesamtgewicht der Aluminiumlegierung, 0,1-0,8 Gew.-% beträgt.

9. Aluminiumlegierung nach Anspruch 8, wobei die Aluminiumlegierung Eisen (Fe) umfasst, und das Verhältnis S des Gesamtgehalts an Mn und Cr zu dem Gehalt an Fe ≥ 0,85 ist.

10. Aluminiumlegierung, umfassend, bezogen auf ein Gesamtgewicht der Aluminiumlegierung: 7,8 Gew.-% Silicium (Si), 0,40 Gew.-% Chrom (Cr), 0,13 Gew.-% Vanadium (V), 291 ppm Strontium (Sr), 0,14 Gew.-% Titan (Ti), 0,40 Gew.-% Mangan (Mn), 0,49 Gew.-% Eisen (Fe), und wobei der Rest Aluminium und unvermeidliche Verunreinigungen ist.

11. Verwendung der Aluminiumlegierung nach einem der Ansprüche 1 bis 10 zur Herstellung eines Komponententeils.

12. Verwendung nach Anspruch 11, wobei das Komponententeil ausgewählt ist aus einer Fahrzeugkarosserie, einem Chassis und anderen lasttragenden Teilen.

13. Komponententeil, das aus der Aluminiumlegierung gemäß einem der Ansprüche 1 bis 10 hergestellt ist.

14. Komponententeil nach Anspruch 13, wobei das Komponententeil ausgewählt ist aus einer Fahrzeugkarosserie, einem Chassis und anderen lasttragenden Teilen.

## Revendications

1. Alliage d'aluminium comprenant, rapporté au poids total de l'alliage d'aluminium : 7-9 % en poids de silicium (Si), 0,15-0,45 % en poids de chrome (Cr), 0,1-0,3 % en poids de vanadium (V), 100-260 ppm de strontium (Sr), 0,1-0,2 % en poids de titane (Ti), 0-0,5 % en poids de manganèse (Mn), 0-0,8 % en poids de fer (Fe), le reste étant de l'aluminium et les inévitables impuretés.

2. Alliage d'aluminium selon la revendication 1 dans lequel, rapporté au poids total de l'alliage d'aluminium, la teneur en silicium est de 7,2-8,6 % en poids, et de préférence, rapporté au poids total de l'alliage d'aluminium, la teneur en silicium est de 7,4-8,4 % en poids, ou bien la teneur en silicium est de 7,6 % en poids, 7,7 % en poids, 7,8 % en poids, 7,9 % en poids, 8,0 % en poids, 8,1 % en poids, 8,2 % en poids, 8,3 % en poids ou 8,4 % en poids.

3. Alliage d'aluminium selon la revendication 1 ou 2 dans lequel, rapporté au poids total de l'alliage d'aluminium, la teneur en chrome est de 0,16-0,44 % en poids, et de préférence, rapporté au poids total de l'alliage d'aluminium, la teneur en manganèse est de 0,17-0,43 % en poids, ou bien la teneur en chrome est de 0,18 % en poids, 0,20 % en poids, 0,30 % en poids, 0,33 % en poids, 0,36 % en poids, 0,37 % en poids, 0,38 % en poids ou 0,40 % en poids.

4. Alliage d'aluminium selon l'une quelconque des revendications 1 à 3 dans lequel, rapporté au poids total de l'alliage d'aluminium, la teneur en vanadium est de 0,11-0,27 % en poids, et de préférence, rapporté au poids total de l'alliage d'aluminium, la teneur en vanadium est de 0,12-0,25 % en poids, ou bien la teneur en vanadium est de 0,13 % en poids, 0,14 % en poids, 0,16 % en poids, 0,17 % en poids, 0,18 % en poids ou 0,2 % en poids.

5. Alliage d'aluminium selon l'une quelconque des revendications 1 à 4 dans lequel, rapporté au poids total de l'alliage d'aluminium, la teneur en titane est de 0,1-0,18 % en poids, et de préférence, rapporté au poids total de l'alliage d'aluminium, la teneur en titane est de 0,1-0,16 % en poids, ou bien la teneur en titane est de 0,11 % en poids, 0,14 % en poids ou 0,15 % en poids.

6. Alliage d'aluminium selon l'une quelconque des revendications 1 à 5 dans lequel, rapporté au poids total de l'alliage d'aluminium, la teneur en strontium est de 100-255 ppm.

7. Alliage d'aluminium selon l'une quelconque des revendications 1 à 6, qui comprend en outre du manganèse, dans lequel, rapporté au poids total de l'alliage d'aluminium, la teneur en manganèse est de 0,005-0,45 % en poids, et de préférence, rapporté au poids total de l'alliage d'aluminium, la teneur en manganèse est de 0,008-0,43 % en poids, ou bien la teneur en manganèse est de 0,009 % en poids, 0,01 % en poids, 0,20 % en poids, 0,25 % en poids, 0,26 % en poids, 0,40 % en poids ou 0,41 % en poids.

8. Alliage d'aluminium selon l'une quelconque des revendications 1 à 7, qui comprend en outre du fer, dans lequel, rapporté au poids total de l'alliage d'aluminium, la teneur en fer est de 0,1-0,8 % en poids.

9. Alliage d'aluminium selon la revendication 8, l'alliage d'aluminium comprenant du fer (Fe), et le rapport S entre la teneur totale en Mn et Cr et la teneur en fer étant ≥ 0,85.

10. Alliage d'aluminium comprenant, rapporté au poids total de l'alliage d'aluminium : 7,8 % en poids de silicium (Si), 0,40 % en poids de chrome (Cr), 0,13 % en poids de vanadium (V), 291 ppm de strontium (Sr), 0,14 % en poids de titane (Ti), 0,40 % en poids de manganèse (Mn), 0,49 % en poids de fer (Fe), le reste étant de l'aluminium et les inévitables impuretés.

11. Utilisation de l'alliage d'aluminium selon l'une quelconque des revendications 1 à 10 dans la préparation d'une pièce constitutive.

12. Utilisation selon la revendication 11, dans laquelle la pièce constitutive est choisie parmi une carrosserie de véhicule, un châssis et autres pièces porteuses.

13. Pièce constitutive, qui est préparée à partir de l'alliage d'aluminium selon l'une quelconque des revendications 1 à 10.

14. Pièce constitutive selon la revendication 13, la pièce constitutive étant choisie parmi une carrosserie de véhicule, un châssis et autres pièces porteuses.
